# EUROPEAN PATENT APPLICATION

(11) **EP 2 916 233 A1**
(43) Date of publication of application: **09.09.2015**
(21) Application number: 12887738.8
(22) Date of filing: 31.10.2012
(51) Int. Cl.: G06F 13/00, H04W 4/02

(54) **CONTENT DISTRIBUTION SYSTEM, PROGRAM AND CONTENT DISTRIBUTION METHOD**

(71) Applicant: Warld Limited, Wan Chai, Hong Kong (CN)
(72) Inventor: KAWAMATSU, Tatsuya, Kiyosu-shi Aichi 452-0022 (JP); SHIKA, Takeshi, Inzai-shi Chiba 270-1342 (JP); SAITO, Yuichi, Nagoya-shi Aichi 457-0833 (JP)
(74) Representative: Seemann & Partner
(86) International application number: PCT/JP2012/078193
(87) International publication number: WO 2014/068707

(57) **Abstract**

Provided is a system that distributes content to an electronic device. The content is intended to notify a user of the electronic device about offering of a specified service. The system comprises a positional information acquisition unit that acquires, from each electronic device, positional information in a plurality of pieces in chronological order, by which a position of the electronic device is identifiable; a candidate selection unit that selects, as a distribution candidate for the content, the electronic device in which a time after elapse of an estimated travel time from a current time is before a time limit corresponding to the content; and a content distribution unit that distributes the content to the electronic device selected for the content by the candidate selection unit.

## Description

### RELATED APPLICATION

This application is a translation of the international application PCT/JP2012/078193 filed on October 31, 2012. The entire content of this application is incorporated herein by reference.

### TECHNICAL FIELD

The present invention relates to a content distribution system that distributes content to an electronic device.

### BACKGROUND ART

Recently, as a technique of notifying a user about offering of a service, it has been proposed to select, as a distribution target of content, an electronic device located near a place where the service is offered, based on positional information of the electronic device (personal digital assistant) possessed by the user (see, for example, Patent Document 1, etc.).

### PRIOR ART DOCUMENTS

### PATENT DOCUMENTS

Patent Document 1: Published Japanese Translation of PCT International Publication for Patent Application No. 2008-538250

### SUMMARY OF THE INVENTION

### PROBLEMS TO BE SOLVED BY THE INVENTION

Nonetheless, the above-described technique is just trying to distribute the content to the electronic device located near the place where the service is offered (within a specified area including the place where the service if offered). Thus, it cannot always be said that an appropriate user is successfully notified, and such notification cannot be said to be effective.

For example, even when the user is away from the place where the service is offered, it is preferable to notify the user located at a place from which the user can reach the place in a short time by utilizing some transportation means (on foot, by bus, by train, etc.) available in a path to the place. However, in the above-described technique, the content is not distributed to the electronic device possessed by such a user.

In contrast, even when the user is near the place where the service is offered, the user should not necessarily be notified if the user is at a place from which it takes a long time to reach the place due to inconvenience of a transportation means (the same as above) available in a path to the place. However, in the above-described technique, the content is also distributed to the electronic device possessed by such a user.

It is preferable that more appropriate and effective notification about offering of the service is enabled.

### MEANS FOR SOLVING THE PROBLEMS

A first aspect of the present invention is a content distribution system that distributes at least one piece of content to at least one electronic device. The system comprises a positional information acquisition unit, a candidate selection unit, and a content distribution unit.

The content is intended to notify a user of the electronic device about offering of a specified service, and at least a place where the service is offered and a time limit for the service are associated with the content. The positional information acquisition unit acquires, from each electronic device, positional information in a plurality of pieces in chronological order, by which a position of the electronic device is identifiable. In a case where a travel time required to move from a position specified by the latest positional information of each electronic device acquired by the positional information acquisition unit to the place where the service is offered corresponding to the content is assumed as an estimated travel time, the candidate selection unit selects, as a distribution candidate for the content, the electronic device in which a time after elapse of the estimated travel time from a current time is before the time limit corresponding to the content. The content distribution unit distributes the content to the electronic device selected for the content by the candidate selection unit.

According to this invention, it is possible to select the electronic device of the user who can reach the place where the service is offered within the time limit based on a relationship between the current time and the estimated travel time of each electronic device, and to set the selected electronic device as a distribution target of the content regarding the service.

That is, the distribution target of the content can be selected from the standpoint of whether the user can reach the place where the service is offered to actually enjoy the offered service within the time limit, and thus, more appropriate and effective notification of the service can be performed compared with a configuration in which the distribution target is selected based merely on a relationship with the place where the service is offered.

In the above aspect, the positional information acquired from the electronic device is only required to enable, based thereon, identification of the position of the electronic device. For example, the positional information may be a latitude and a longitude (an altitude may be added thereto) of the place where the electronic device is located, or may be information indicating an address, a geographical name, or the like.

The positional information may be acquired directly from the electronic device concerned via the network, or may be acquired by other device and then acquired indirectly. The above-described estimated travel time may be a travel time required to move from the position specified by the latest positional information to the place where the service is offered, and may be calculated as a time corresponding to a transportation means available in such a path.

In the above aspect, the service may require a certain period of time for utilization thereof depending on contents of the service, and thus, the distribution candidate may be selected considering such a period of time. In order to do so, the invention of the above aspect may be configured as in a second aspect described below.

In the second aspect of the present invention, an estimated utilization time estimated to be required for utilization of the service is associated with the content, and the candidate selection unit selects, as the distribution candidate for the content, the electronic device in which a time after elapse of the estimated travel time and the estimated utilization time corresponding to the content from the current time is before the time limit corresponding to the content.

According to this invention, it is possible to select the electronic device of the user who can reach the place where the service is offered to utilize the service within the time limit for the service based on a relationship among the current time, the estimated travel time, and the estimated utilization time, and to set the selected electronic device as the distribution target of the content regarding the service.

That is, the distribution target of the content can be selected from the standpoint of whether the user has plenty of time before reaching the place where the service is offered to utilize the service within the time limit, and thus, more appropriate and effective notification of the service can be performed, in the case where the service requires a certain period of time for utilization thereof.

In a case where the user is staying at a specific place, the user does not always start moving from the place immediately, and thus, when distributing the content, the distribution candidate may be selected considering such a stay time. In order to do so, the inventions of the respective aspects as above may be configured as in a third aspect described below.

In the third aspect of the present invention, the content distribution system comprises a stay determination unit and an average calculation unit. The stay determination unit determines that the electronic device is staying at a specific place while the position specified by the positional information of each electronic device sequentially acquired by the positional information acquisition unit is not changed or changed only within a specified area. The average calculation unit calculates an average stay time, which is an average of a period of time during which each electronic device is determined to be staying at the specific place by the stay determination unit. In a case where a period of time that is a difference between the average stay time calculated for each electronic device by the average calculation unit and an elapsed time elapsed after the electronic device is determined to be staying at the specific place by the stay determination unit is assumed as an estimated stay time, the candidate selection unit selects the electronic device in which a time after elapse of the estimated travel time and the estimated stay time from the current time is before the time limit corresponding to the content.

According to this invention, it is possible to select the electronic device of the user who can reach the place where the service is offered within the time limit for the service even after staying at a specific place for the estimated stay time, based on a relationship among the current time, the estimated travel time, and the estimated stay time, and to set the selected electronic device as the distribution target of the content regarding the service.

That is, the distribution target of the content can be selected from the standpoint of whether the user can reach the place where the service is offered within the time limit even when the user is assumed to stay at a specific place for a certain period of time, and thus, more appropriate and effective notification of the service can be performed.

In the meantime, some content as described above is assumed to have a long period of time left before the time limit for the service, and as for such content, even the user whose estimated travel time is long is expected to visit the place where the service is offered with a relatively high probability.

For example, the user staying at a base for activities, such as his/her home, workplace, or other place he/she often drops in or heading to the base for activities is expected to subsequently stay at the base for activities for a long period of time. However, if there is plenty of time left before the time limit for the service even considering the stay time and the estimated travel time, it is preferable to make a notification about the offering of the service. Thus, the electronic device possessed by such a user may also be selected as the distribution candidate.

In order to do so, the inventions of the respective aspects as above may be configured as in a fourth aspect and a fifth aspect described below.

In the fourth aspect of the present invention, the base for activities indicating a place in which the user of the electronic device is based when acting is associated with each electronic device. The candidate selection unit selects, as the distribution candidate for the content having a specified period of time or longer left before the time limit, the electronic device in which the position thereof specified by the latest positional information acquired by the positional information acquisition unit coincides with the base for activities or is within a range less than a specified distance from the base for activities.

According to this invention, as for the content having a specified period of time or longer left before the time limit, the electronic device of the user located at the base for activities or located near the base for activities can be set as the distribution target.

In the fifth aspect of the present invention, the base for activities indicating the place in which the user of the electronic device is based when acting is associated with each electronic device. The content distribution system comprises a direction estimation unit. The direction estimation unit estimates a direction in which the electronic device moves based on transition of the position specified by the positional information of each electronic device sequentially acquired by the positional information acquisition unit. The candidate selection unit selects, as the distribution candidate for the content having a specified period of time or longer left before the time limit, the electronic device in which the direction estimated by the direction estimation unit is a direction leading to the base for activities.

According to this invention, as for the content having a specified period of time or longer left before the time limit, the electronic device of the user heading to the base for activities can be set as the distribution target.

In the above fourth and fifth aspects, the base for activities associated with each electronic device may be information associated with the electronic device in advance, or may be information acquired from the electronic device as occasion demands.

In the above fourth and fifth aspects, as for the content having a specified period of time or longer left before the time limit, only the electronic device of the user staying at the base for activities or heading to the base for activities may be selected as the distribution target. Alternatively, such an electronic device may be selected additionally to the selection in the respective aspects as above.

What is meant by "having a specified period of time or longer left before the time limit" in the above fourth and fifth aspects may be a period of time during which the user is expected to reach the base for activities and stay there or longer. For example, such a period of time may be half a day or a period of time defined on a daily or weekly basis.

In the respective aspects as above, the distribution targets of the content may be narrowed down according to conditions other than those described above. Specifically, in the case where user attributes (gender, age, and so on) of the user targeted to be serviced are associated with each content, the distribution targets may be narrowed down based on these user attributes. In order to do so, the inventions of the respective aspects as above may be configured as in a sixth aspect described below.

In the sixth aspect of the present invention, the content distribution system comprises an attribute information acquisition unit. The user attributes targeted to be serviced are associated with the content. The attribute information acquisition unit acquires, from each at least one electronic device, the user attributes related to the user of the electronic device. The candidate selection unit selects the distribution candidate for the content from the electronic devices in which the user attributes acquired by the attribute information acquisition unit are in agreement with the user attributes corresponding to the content.

According to this invention, the distribution targets of the content can be narrowed down based on the user attributes, and thus, further more appropriate notification of the offering of the service to the user can thereby be performed.

In this aspect, the user attributes in the electronic device may be directly acquired from the electronic device concerned via the network, or may be acquired by other device and then acquired indirectly.

In a seventh aspect of the present invention, a computer is caused to function as all elements in any of the above aspects.

A computer system implementing this program produces operations and effects similar to those in the inventions of the respective aspects as above.

This program can be provided to an image processing terminal or a user thereof in a state of being recorded on a recording medium readable by a computer, such as an optical disk such as a CD-ROM or a DVD, a magnetic disk, and a semiconductor memory, for example.

An eighth aspect of the present invention is a content distribution method for distributing at least one piece of content to at least one electronic device by means of at least one server. The method comprises a positional information acquisition process, a candidate selection process, and a content distribution process.

The content is intended to notify a user of the electronic device about offering of a specified service, and at least a place where the service is offered and a time limit for the service are associated with the content. The positional information acquisition process acquires, from each electronic device, positional information in a plurality of pieces in chronological order, by which a position of the electronic device is identifiable. In a case where a travel time required to move from a position specified by the latest positional information of each electronic device acquired in the positional information acquisition process to the place where the service is offered corresponding to the content is assumed as an estimated travel time, the candidate selection process selects, as a distribution candidate for the content, the electronic device in which a time after elapse of the estimated travel time from a current time is before the time limit corresponding to the content. The content distribution process distributes the content to the electronic device selected for the content in the candidate selection process.

The server that distributes the content by the above method produces operations and effects similar to those in the inventions of the respective aspects as above.

### BRIEF DESCRIPTION OF THE DRAWINGS

FIG. 1 is a block diagram showing an overall configuration of a content distribution system.
FIG. 2 is a flowchart showing an information registration process.
FIG. 3 is a flowchart showing a behavior pattern estimation process.
FIG. 4 is a flowchart showing a content distribution process.
FIG. 5 is a flowchart showing a final selection process.
FIG. 6 is a chart showing a timing regarding a selection of a distribution target.

### EXPLANATION OF REFERENCE NUMERALS

1...content distribution system, 11...control unit,
13...communication unit, 15...storage unit, 17...input unit,
19...display unit, 2...electronic device, 21...control unit,
23...communication unit, 25...storage unit, 31...GPS sensor,
33...acceleration sensor, 41...camera unit, 43...input unit,
45...display unit, 47...sound input/output unit, 100...network

### MODE FOR CARRYING OUT THE INVENTION

An embodiment of the present invention will be explained below with reference to the drawings.

### (1) Overall configuration

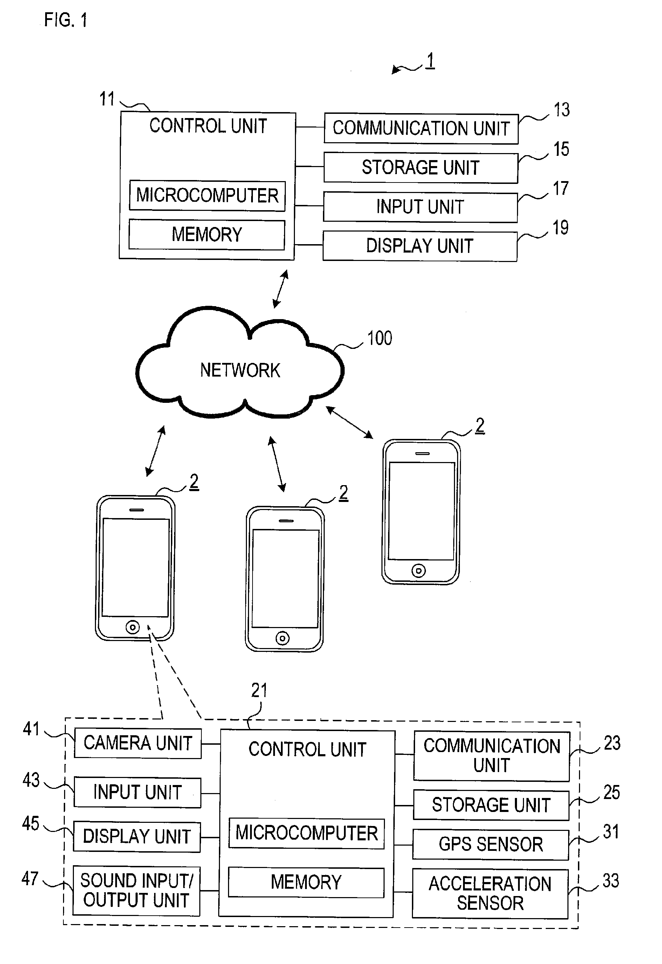

As shown in FIG. 1, a content distribution system 1 comprises a control unit 11, a communication unit 13, a storage unit 15, an input unit 17, a display unit 19, and so on, and is a server computer configured to be able to communicate with each at least one electronic device 2 via a network 100.

Of these, the control unit 11 controls an operation of the entire system. The communication unit 13 comprises a communication module that is in conformity with a specific telecommunications standard (LAN standard), and controls a communication performed via the network 100 by the content distribution system 1.

Stored in the storage unit 15 is a database that comprises various information groups registered therein about each electronic device 2, a plurality of pieces of content generated for the purpose of notifying a user about offering of each specific service, or the like.

The content is generated for the purpose of notifying the user about the offering of the specific service in order to promote utilization of the service, and at least below-listed information is associated with the content.

### [Information associated with the content]

- User attributes → Attributes of the user targeted to be serviced, such as gender, age, or the like.
- Place where service is offered → Positional information about a place where the service is offered
- Time limit for service → Time limit set for the service
- Estimated utilization time → Period of time estimated to be required for utilization of the service
- Distribution schedule → Information specifying time to distribute the content

"Service" referred to here means transfer of a tangible goods (whether with or without compensation), or transfer of information property, such as data for computer, application program, dictated information, and license of these (whether with or without compensation). The above "content" is intended to perform advertising and publicity of such goods or information property, or intended to notify the user about information on a discount at the time such goods or information property is transferred with compensation.

The electronic device 2 in the present embodiment is a mobile-phone terminal that comprises a control unit 21, a communication unit 23, a storage unit 25, a GPS sensor 31, an acceleration sensor 33, a camera unit 41, an input unit 43, a display unit 45, a sound input/output unit 47, and so on.

Of these, the GPS sensor 31 is a sensor to identify a current position of the electronic device 2 based on radio waves from a plurality of GPS (Global Positioning System) satellites, and the acceleration sensor 33 is a sensor to detect an acceleration applied to the electronic device 2 and a direction of the acceleration.

The input unit 43 comprises a touch panel configured integrally with a display screen of the display unit 45 and key switches provided to a terminal body. The user's input operation is accepted via these.

The thus-configured electronic device 2 is configured to be able to transmit, as a command to the content distribution system 1, a registration request and a position notification accompanied by information as below.

### [Command from the electronic device 2 and accompanying information]

- Registration request (identification information, user attributes, bases for activities)
- Position notification (identification information, positional information)

Of these, the registration request is transmitted together with the identification information of the electronic device 2 (and the user possessing this) when an operation for user registration is performed after a specific application program is activated in the electronic device 2. The registration request is a command for requesting registration of the user attributes (gender, age, and so on), the bases for activities indicating places in which the user is based when acting (e.g., the positional information of residence, school, workplace, etc.), or the like (i.e., registration of one or more of a plurality of kinds of information including the "user attributes" and the "bases for activities").

On the other hand, the position notification is transmitted periodically (at arbitrarily set intervals, e.g., every ten minutes to one hour, or so) together with the above-described identification information, after the application program similar to the above is activated and the user registration based on the above registration request is finished. The position notification is a command for requesting registration of the positional information, etc., of the electronic device 2.

In the present embodiment, a latitude and a longitude (an altitude may be added thereto) of the position concerned are used as the above-described positional information. However, information indicating an address, a geographical name, or the like may be used.

### (2) Process by the control unit 11

Here, an explanation will be given of various processes performed by the control unit 11 in accordance with a program stored in the storage unit 15.

### (2-1) Information registration process

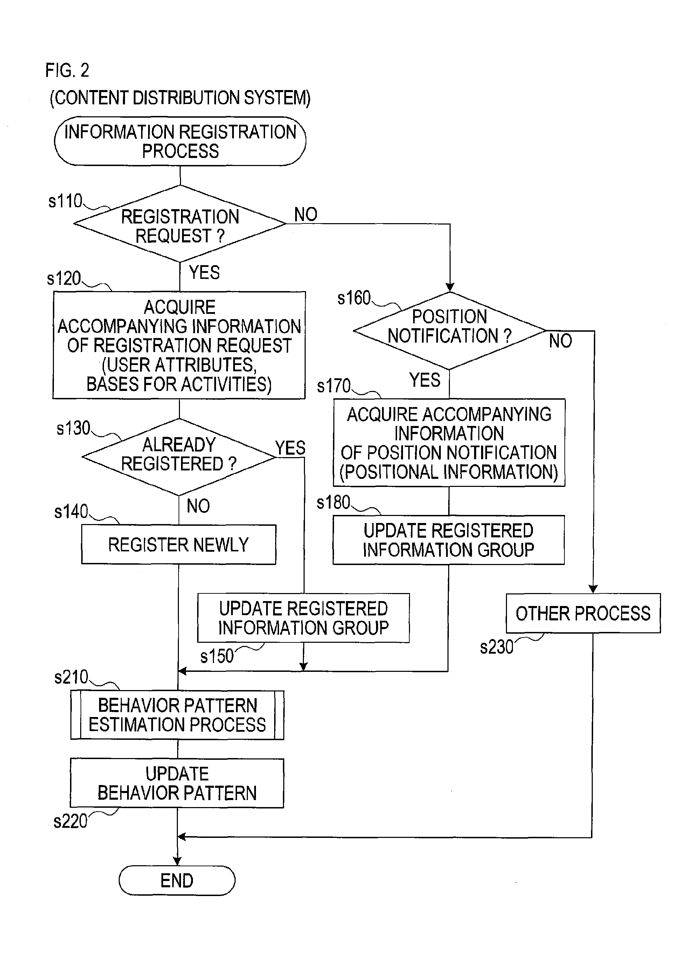

First, procedures of an information registration process activated each time the command from the electronic device 2 is received will be explained based on FIG. 2.

When this information registration process is activated, details of the command received prior to the activation are first checked, and if this command is determined to be the registration request (s110: YES), the information (identification information, user attributes, bases for activities) accompanying this registration request is acquired (s120).

Next, it is checked whether the electronic device 2 (and the user possessing this) that transmitted the registration request has been already registered based on the identification information acquired in the above s120 (hereinafter referred to as "acquired identification information" in the explanation of the present process) (s130).

In the present embodiment, information as below including the user attributes and the bases for activities is registered, in the above database, associated with the identification information. In this s130, if identification information identical to the acquired identification information is registered in the above database, the electronic device 2 concerned is determined to have been already registered.

### [Registered contents in the database]

- Identification information → Information allocated for the purpose of identifying the electronic device 2 and the user thereof
- User attributes → Attributes of the user targeted to be serviced, such as gender, age, or the like
- Bases for activities → Positional information on the places in which the user based when acting, such as residence, school, workplace, etc.
- Positional information group → At least one piece of positional information acquired periodically from the electronic device 2
- Behavior pattern → Behavior pattern of the user estimated in a behavior pattern estimation process to be described later
- Stay history → Positional information on a place where the user stayed in the past (place of stay)
- Average stay time → Average of the time during which the user stayed at the place of stay
- Stay state flag → Flag indicating whether the user is staying at a specified place

If the electronic device 2 is determined not to have been registered yet in this s130 (s130: NO), other information acquired concurrently in the above s120 is newly registered associated with the acquired identification information (s140). It is to be noted that this step is configured such that a data set including information not yet acquired at this point (the point when the electronic device 2 is determined not to have been registered yet) is to be registered, and an initial value (NULL in the present embodiment) is set for information not yet acquired.

In contrast, if the electronic device 2 is determined to have been already registered in the above s130 (s130: YES), the information group that has been registered, in the above database, associated with the identification information identical to the acquired identification information is updated based on the other information acquired in the above s120 (s150).

Here, the user information and the base for activities corresponding to the identification information identical to the acquired identification information are replaced by the user attributes and the base for activities acquired in the above s120. It is to be noted that the base for activities acquired in the above s120 may be registered in an additional manner, not replacing the base for activities corresponding to the identification information identical to the acquired identification information.

If the command received prior to the activation of the present information registration process is determined to be the position notification (s110: NO, s160: YES), information accompanying this position notification (identification information, positional information) is acquired (s170). This position notification is a command transmitted from the electronic device 2 in chronological order, and thus, the positional information is to be acquired periodically by the present information registration process.

The timing for the electronic device 2 to transmit the position notification is after an initial registration is performed in advance based on the registration request, and the electronic device 2 is in a registered state thereafter. Thus, in the present embodiment, when the position notification is received, whether the electronic device 2 has been already registered is not checked and the process proceeds to the next process (s180).

Next, based on the identification information acquired in the above s170 (acquired identification information), the information group that has been registered, in the above database, associated with the identification information identical to this acquired identification information is updated based on other information acquired in the above s170 (s180).

Here, the positional information acquired in the above s170 is additionally registered as information corresponding to the identification information identical to the acquired identification information. In this way, the positional information acquired in the above s170 becomes part of the "positional information group" corresponding to the identification information identical to the acquired identification information.

After the above s140, s150, and s180 are finished in this way, the behavior pattern estimation process for estimating the behavior pattern of the user identified by the acquired identification information is performed (s210). This behavior pattern estimation process is activated using, as an argument, the information group corresponding to the identification information identical to the acquired identification information from among the information group registered in the above database.

As will be described later, the process returns from the behavior pattern estimation process using, as a return value, a behavior pattern such as "staying at the base for activities", "staying at a place other than the base for activities", "moving to the base for activities", and "moving to a place other than the base for activities" as the behavior pattern of the user concerned.

Then, the behavior pattern that has been registered, in the above database, associated with the identification information identical to the acquired identification information is updated to the return value in the above behavior pattern estimation process (s220), and then, the present information registration process ends.

If the command received prior to the activation of the present information registration process is determined to be a command other than the registration request and the position notification (s160: NO), a process corresponding to the command (other process) is performed (s230), and then, the present information registration process ends.

### (2-2) Behavior pattern estimation process

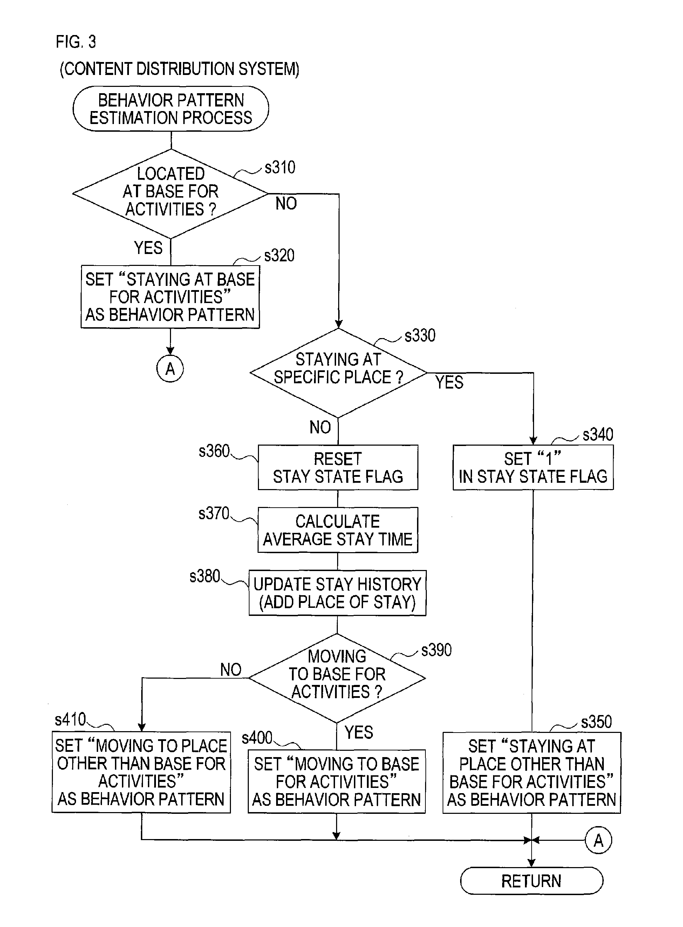

Next, procedures of the behavior pattern estimation process performed in s210 in the information registration process will be explained based on FIG. 3.

When this behavior pattern estimation process is activated, it is first checked, based on the information group passed from the information registration process, whether the electronic device 2 identified by the identification information in the information group is located at the base for activities (s310).

Here, the electronic device 2 is determined to be located in the base for activities based on a criterion in which the latest positional information in the information group passed from the information registration process overlaps with any base for activities in the passed information group or is within a range less than a specified distance (e.g., less than several meters) from this base for activities.

In this s310, if the electronic device 2 is determined to be located at the base for activities (s310: YES), "staying at the base for activities" is set as the behavior pattern (s320), and the process returns to the information registration process with this "staying at the base for activities" used as a return value.

In contrast, if the electronic device 2 is determined not to be located at the base for activities in the above s310 (s310: NO), it is checked, based on the information group passed from the information registration process, whether the electronic device 2 concerned (the electronic device 2 identified by the identification information passed from the information registration process; the same shall apply hereafter) is in a state staying at a specific place (s330). Here, the positional information passed from the information registration process is extracted in a specified number of pieces (e.g., in three pieces) in order from the latest one, and when these pieces of the positional information show a tendency of chronologically changing in a specific direction, the user is determined to be in motion. In contrast, when the positional information does not show the tendency of chronologically changing in a specific direction or, even if such a tendency is shown, when an amount of such change is less than a specified one (e.g., several meters), the user is determined to be staying at a specific place.

If the user is determined to be staying at the specific place in this s330, (s330: YES), based on the identification information passed from the information registration process, "1" (a value that means staying) is set in a stay state flag that has been registered, in the above database, associated with this identification information (s340).

In setting and resetting this stay state flag, timings (clock times) thereof are configured to be recorded in a memory or the storage unit 15 on an as-needed basis, and thus, a duration for which the stay state flag had been set or reset can be specified by reference to such timings.

Subsequently, "staying at a place other than the base for activities" is set as the behavior pattern (s350), and then, the process returns to the information registration process with this "staying at a place other than the base for activities" used as a return value.

In contrast, if the user is determined to be in motion in the above s330 (s330: NO), the stay state flag as described in the above s340 is reset ("0" is set) (s360).

Next, based on the identification information passed from the information registration process, an average stay time that has been registered, in the above database, associated with this identification information is updated (s370).

Here, the stay state flag reset in the above s360 is first referred to, and the most recent duration during which "1" had been set in the stay state flag (i.e., for which the user had been staying at the specific place) is thereby specified.

Only in a case where this duration is equal to or longer than a specified threshold (e.g., 30 minutes), an average between the average stay time registered in the above database and the thus-specified duration is calculated, and the calculated average becomes an updated new average stay time. That is, if the duration is a short time less than the threshold, the average stay time is not updated.

Next, based on the identification information passed from the information registration process, the stay history that has been registered, in the above database, associated with this identification information is updated (s380).

Here, similarly to the above s370, the stay state flag is referred to, and a start time and an end time of the duration for which "1" had been set in the stay state flag in the most recent case are thereby specified. Subsequently, respective pieces of the positional information acquired during a period from the start time to the end time are extracted from the positional information group passed from the information registration process, and a place represented by these pieces of the positional information (e.g., an average, a most-densely distributed area, or the like) is specified as the place of stay. Then, the specified place of stay is additionally registered to the stay history registered in the above database.

In a case where a time stamp is added to the positional information and also a time when the positional information is acquired can be specified therefrom, respective pieces of the positional information acquired during the period from the start time to the end time may be specified by comparison with the specified time of acquisition. Alternatively, the respective pieces of the positional information acquired during the period from the start time to the end time may be specified (calculated) based on a cycle in which the positional information is acquired, etc.

Next, it is checked whether the user possessing the electronic device 2 concerned is moving to the base for activities or moving to other place based on the base for activities and the latest positional information passed from the information registration process and the direction of movement determined in the checking in the above s330 (s390). Here, if the direction of movement is a direction leading from the latest current position to any base for activities, the user is determined to be moving to the base for activities, and if the direction of movement is not headed to any base for activities, the user is determined to be moving to other place.

If the user is determined to be moving to the base for activities in this s390, (s390: YES), "moving to the base for activities" is set as the behavior pattern (s400), and then, the process returns to the information registration process with this "moving to the base for activities" used as a return value.

In contrast, if the user is determined to be moving to a place other than the base for activities in the above s390 (s390: NO), "moving to a place other than the base for activities" is set as the behavior pattern (s410), and then, the process returns to the information registration process with this "moving to a place other than the base for activities" used as a return value.

In this behavior pattern estimation process, the information group passed from the information registration process is referred to in some procedures. However, this process may be configured such that only the identification information is passed from the information registration process and, as for the other information, information that has been registered, in the above database, associated with this identification information is referred to.

### (2-3) Content distribution process

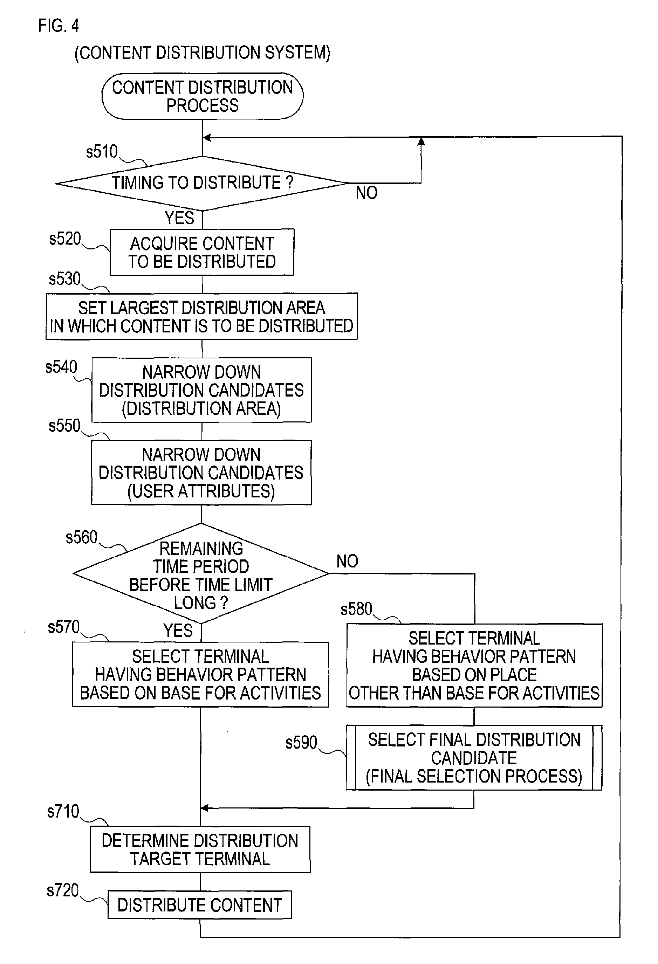

Subsequently, procedures of a content distribution process performed repeatedly after activation of the content distribution system 1 will be explained based on FIG. 4.

When the content distribution process is activated, the process becomes a standby state until a timing comes when any content stored in the storage unit 15 should be distributed at that point (s510: NO).

The present embodiment is configured such that respective pieces of content stored in the storage unit 15 are arranged in advance in order from the content to be distributed at the soonest timing based on a distribution schedule (organized in such a manner that the order of distribution is identifiable) for each specific period of time. In this s510, the standby state continues until the timing of distribution of the content to be distributed in the nearest future comes.

Then, when it is time for any content to be distributed (s510: YES), the content to be distributed is acquired from the storage unit 15 (s520).

Next, the largest distribution area in which the content is to be distributed is set (s530). Here, an area defined statistically or experimentally as an area from which the user may visit the place where the service is offered corresponding to the content acquired in the above s520 (hereinafter referred to as "target content" in the explanation of the present process) is set as the largest distribution area of the target content. This largest distribution area may be set as a distance range that is constant at any time (e.g., a range within tens of kilometers to the place where the service is offered in direct distance, etc.).

Next, the electronic device 2 located out of the distribution area set in the above s530 is eliminated as a distribution candidate for the target content, and the distribution candidates are thereby narrowed down (s540). Here, in the latest positional information registered in the above database, the positional information corresponding to the outside of the distribution area set in the above s530 is specified, and information corresponding to this, such as the identification information, is set not to be referred to in the subsequent process. In this way, the distribution candidates are narrowed down.

In this s540, the largest distribution area may be adjusted to be larger or smaller as appropriate so that a specified number or more of the electronic devices 2 are left as the distribution candidates.

Next, the electronic device 2 of the user having a low degree of agreement with the user attributes corresponding to the target content is eliminated as the distribution candidate for the target content, and the distribution candidates are thereby narrowed down (s550). Here, in the user attributes registered in the above database, some of the user attributes are determined not to be in agreement with the user attributes corresponding to the target content, and information corresponding to such attributes, such as the identification information, is set not to be referred to in the subsequent process. In this way, the distribution candidates are narrowed down.

Such "user attributes determined not to be in agreement" mean user attributes, a specified number or more of which are not in agreement, or all of which are not in agreement, for example, in comparison with the user attributes corresponding to the target content.

In this s550, the condition for the degree of agreement may be adjusted to be stricter or milder as appropriate so that a specified number or more of the electronic devices 2 are left as the distribution candidates.

Next, a remaining time period before the time limit for the target content is checked (s560). If the remaining time period is determined to be a relatively long period of time (e.g., half a day or an arbitrary period of time defined on a daily or weekly basis) (s560: YES), the electronic device 2 having a behavior pattern based on the base for activities is selected as the distribution candidate (s570). Here, from among the behavior patterns registered in the above database, the behavior patterns set to "staying at the base for activities" or "moving to the base for activities" are extracted, and the electronic device 2 identified by the identification information corresponding to the extracted behavior patterns is selected as the distribution candidate.

In contrast, if the remaining time period is determined not to be a long period of time in the above s560 (s56: NO), the electronic device 2 having a behavior pattern based on a place other than the base for activities is selected as the distribution candidate (s580). Here, from among the behavior patterns registered in the above database, the behavior patterns set to "staying at a place other than the base for activities" or "moving to a place other than the base for activities" are extracted, and the electronic device 2 identified by the identification information corresponding to the extracted behavior patterns is selected as the distribution candidate.

After the electronic device 2 is selected in this s580, from among the thus-selected distribution candidates, the electronic device 2 of the user who can reach the place where the service is offered within the time limit thereof is selected as the final distribution candidate (s590).

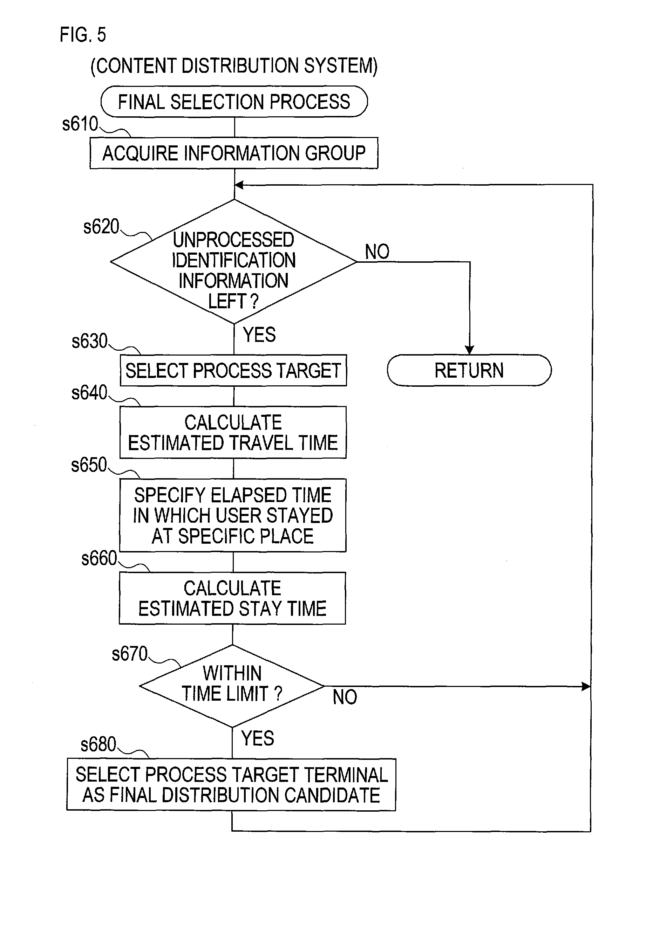

Here, the final distribution candidate is selected as below (the final selection process; see FIG. 5).

First, in the above database, the identification information narrowed down and selected in or before the above s580, and the information group corresponding to the identification information are each acquired (s610).

Next, in the information group acquired in the above s610, it is checked whether there is any identification information left unprocessed in the process thereafter (s620).

If there is any identification information left unprocessed in this s620 (s620: YES), any of the identification information unprocessed and the information group corresponding thereto are selected as subsequent process targets (s630).

Next, a position (current position) identified by the latest positional information in the process-target information group is taken as a basis, and a travel time required to move from this current position to the place where the service is offered corresponding to the target content is calculated as an "estimated travel time" (s640).

Here, by means of a known path finding algorithm, a travel path and a travel time when utilizing some transportation means (on foot, by bus, by train, etc.) from the current position to the place where the service is offered are calculated in a plurality of kinds, by varying one or both (combination) of the transportation means and a travel section taken. The longest travel time of these is calculated as the "estimated travel time". Here, although the longest travel time is set as the "estimated travel time", an average of the travel times calculated in the plurality of kinds or the shortest travel time thereof may be set as the "estimated travel time".

Next, the stay state flag in the process-target information group is referred to, and the most recent duration for which "1" had been continuously set in the stay state flag is thereby specified as an elapsed time in which the user stayed at a specific place (s650).

Next, a period of time that is a difference between the average stay time in the process-target information group and the elapsed time specified in the above s650 is calculated as an "estimated stay time" (s660). This estimated stay time is acquired by subtracting the elapsed time from the average stay time, and is a remaining stay time for which the user will supposedly continue to stay subsequently.

Then, a time at which the above "estimated travel time" and the above "estimated stay time" have elapsed from the current time is compared with the time limit associated with the target content, and it is checked whether such time is within this time limit (s670).

If the time is determined to be within the time limit in this s670, (s670: YES), the electronic device 2 identified by the process-target identification information is selected as the final distribution candidate (s680), and then, the process returns to the above s620.

In contrast, if the time is determined to be beyond the time limit in the above s670 (s670: NO), the process returns to the above s620 with no selection performed in the above s680.

Thereafter (after the process returns to the above s620), the processes in and after the above s620 are repeated until all the unprocessed identification information is processed, and when there is no unprocessed identification information left any longer (s620: NO), the process proceeds to the next process (s710).

Then, each electronic device 2 selected as the distribution candidate in the above s570 or the above s680 is determined to be a distribution target of the content (s710). The target content is transmitted to each electronic device 2 determined to be the distribution target as above (s720), and then, the process returns to the above s510.

### (4) Operations and effects

In the thus-configured content distribution system 1, the electronic device 2 of the user who can reach the place where the service is offered within the time limit is selected based on a relationship between the current time and the estimated travel time of each electronic device 2 (s640 to s670), and the selected electronic device 2 can be set as the distribution target of the content regarding the service (s680).

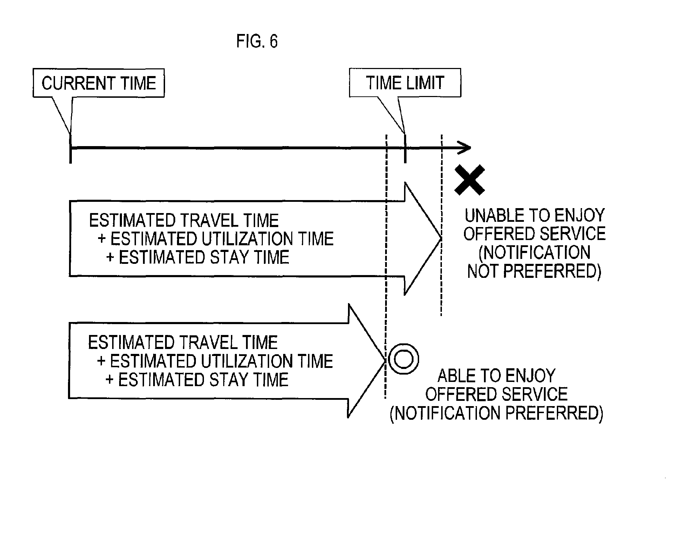

That is, the distribution target of the content can be selected from the standpoint of whether the user can reach the place where the service is offered to actually enjoy the offered service within the time limit (see FIG. 6), and thus, more appropriate and effective notification of the service can be performed compared with the a configuration in which the distribution target is selected based merely on the relationship with the place where the service is offered.

In the above embodiment, the electronic device 2 of the user who can reach the place where the service is offered within the time limit for the service to utilize the service is selected based not only on the current time and the estimated travel time but also on the relationship with the estimated utilization time (s670), and the selected electronic device 2 can be set as the distribution target of the content regarding the service (s680).

That is, distribution target of the content can be selected from the standpoint of whether the user has plenty of time before reaching the place where the service is offered to utilize the service within the time limit (see FIG. 6), and thus, more appropriate and effective notification of the service can be performed, in the case where the service requires a certain period of time for utilization thereof.

In the above embodiment, the electronic device 2 of the user who can reach the place where the service is offered within the time limit for the service after staying at a specific place for the estimated stay time is selected based not only on the current time and the estimated travel time but also on the relationship with the estimated stay time (s660), and the selected electronic device 2 can be set as the distribution target of the content regarding the service (s680).

That is, the distribution target of the content can be selected from the standpoint of whether the user can reach the place where the service is offered within the time limit even when the user is assumed to stay at a specific place for a certain period of time (see FIG. 6), and thus, more appropriate and effective notification of the service can be performed.

In the above embodiment, in the case of the content whose remaining time period before the time limit is long, the electronic device 2 of the user who is in the behavior pattern based on the base for activities, i.e., the user who is located at the base for activities, located near the base for activities, or heading to the base for activities, can be set as the distribution target (s560 to s710).

For example, the user staying at the base for activities, such as his/her home, workplaces, or other place he/she often drops in, or heading to the base for activities is expected to subsequently stay at the base for activities for a long period of time. If there is plenty of time left before the time limit for the service even considering the stay time and the estimated travel time, it is preferable to make a notification about the offering of the service.

In the above embodiment, the distribution targets of the content can be narrowed down based on the user attributes (s550), and thus, further more appropriate notification of the offering of the service to the user can thereby be performed.

### (5) Modified examples

Although the embodiment of the present invention has been explained so far, the present invention is not limited to the above embodiment, and it is needless to say that the present invention can take various forms as long as they are within the technical scope of the present invention.

For example, the above embodiment is configured such that the user attributes and the positional information are directly received and acquired from each electronic device 2 via the network 100 (s120 and s170). However, this positional information may be configured to be acquired by a device other than the content distribution system 1 and then to be acquired indirectly.

As another example, the above embodiment is configured such that, in the case of the content whose remaining time period before the time limit is long, only the electronic device 2 of the user who is in the behavior pattern based on the base for activities is selected as the distribution target. However, in the case of this kind of content, such electronic device 2 may be configured to be selected additionally to the selection in the case where the remaining time period before the time limit is not long. In order to do so, it may be possible that, in the content distribution process, the process proceeds to s580 after the process in s570 is performed.

As still another example, the case in which the electronic device 2 is a mobile-phone terminal is exemplified in the above embodiment. However, this electronic device may be other electronic devices, such as a personal digital assistant, as long as the current position can be specified by the electronic device itself or other system and the electronic device has a function of reproducing the content so as to be able to notify the user about the content.

### (6) Correspondence relationships with the present invention

In the above embodiment, s170 in the information registration process is an example of a positional information acquisition unit of the present invention, s120 in the same process is an example of an attribute information acquisition unit of the present invention, s540 to s710 in the content distribution process (including the final selection process) are an example of a candidate selection unit of the present invention, s720 in the same process is an example of a content distribution unit of the present invention, s310 and s330 in the behavior pattern estimation process are an example of a stay determination unit of the present invention, s370 in the same process is an example of an average calculation unit of the present invention, and s330 in the same process is an example of a direction estimation unit of the present invention.

## Claims

1. A content distribution system that distributes at least one piece of content to at least one electronic device, the system comprising a positional information acquisition unit, a candidate selection unit, and a content distribution unit,
wherein the content is intended to notify a user of the electronic device about offering of a specified service, and at least a place where the service is offered and a time limit for the service are associated with the content,
wherein the positional information acquisition unit acquires, from each electronic device, positional information in a plurality of pieces in chronological order, by which a position of the electronic device is identifiable,
wherein, in a case where a travel time required to move from a position specified by the latest positional information of each electronic device acquired by the positional information acquisition unit to the place where the service is offered corresponding to the content is assumed as an estimated travel time, the candidate selection unit selects, as a distribution candidate for the content, the electronic device in which a time after elapse of the estimated travel time from a current time is before the time limit corresponding to the content, and
wherein the content distribution unit distributes the content to the electronic device selected for the content by the candidate selection unit.

2. The content distribution system according to claim 1,
wherein an estimated utilization time estimated to be required for utilization of the service is associated with the content, and
wherein the candidate selection unit selects, as the distribution candidate for the content, the electronic device in which a time after elapse of the estimated travel time and the estimated utilization time corresponding to the content from the current time is before the time limit corresponding to the content.

3. The content distribution system according to claim 1 or 2, comprising a stay determination unit and an average calculation unit,
wherein the stay determination unit determines that the electronic device is staying at a specific place while the position specified by the positional information of each electronic device sequentially acquired by the positional information acquisition unit is not changed or changed only within a specified area,
wherein the average calculation unit calculates an average stay time, which is an average of a period of time during which each electronic device is determined to be staying at the specific place by the stay determination unit, and
wherein, in a case where a period of time that is a difference between the average stay time calculated for each electronic device by the average calculation unit and an elapsed time elapsed after the electronic device is determined to be staying at the specific place by the stay determination unit is assumed as an estimated stay time, the candidate selection unit selects the electronic device in which a time after elapse of the estimated travel time and the estimated stay time from the current time is before the time limit corresponding to the content.

4. The content distribution system according to any of claims 1 to 3,
wherein a base for activities indicating a place in which the user of the electronic device is based when acting is associated with each electronic device, and
wherein the candidate selection unit selects, as the distribution candidate for the content having a specified period of time or longer left before the time limit, the electronic device in which the position thereof specified by the latest positional information acquired by the positional information acquisition unit coincides with the base for activities or is within a range less than a specified distance from the base for activities.

5. The content distribution system according to any of claims 1 to 4,
wherein the base for activities indicating the place in which the user of the electronic device is based when acting is associated with each electronic device,
wherein the content distribution system comprises a direction estimation unit,
wherein the direction estimation unit estimates a direction in which the electronic device moves based on transition of the position specified by the positional information of each electronic device sequentially acquired by the positional information acquisition unit, and
wherein the candidate selection unit selects, as the distribution candidate for the content having a specified period of time or longer left before the time limit, the electronic device in which the direction estimated by the direction estimation unit is a direction leading to the base for activities.

6. The content distribution system according to any of claims 1 to 5, comprising an attribute information acquisition unit,
wherein user attributes targeted to be serviced are associated with the content,
wherein the attribute information acquisition unit acquires, from each at least one electronic device, the user attributes related to the user of the electronic device, and
wherein the candidate selection unit selects the distribution candidate for the content from the electronic device in which the user attributes acquired by the attribute information acquisition unit are in agreement with the user attributes corresponding to the content.

7. A program that causes a computer to function as all elements according to any of claims 1 to 6.

8. A content distribution method for distributing at least one piece of content to at least one electronic device by means of at least one server, the method comprising a positional information acquisition process, a candidate selection process, and a content distribution process,
wherein the content is intended to notify a user of the electronic device about offering of a specified service, and at least a place where the service is offered and a time limit for the service are associated with the content,
wherein the positional information acquisition process acquires, from each electronic device, positional information in a plurality of pieces in chronological order, by which a position of the electronic device is identifiable,
wherein, in a case where a travel time required to move from a position specified by the latest positional information of each electronic device acquired in the positional information acquisition process to the place where the service is offered corresponding to the content is assumed as an estimated travel time, the candidate selection process selects, as a distribution candidate for the content, the electronic device in which a time after elapse of the estimated travel time from a current time is before the time limit corresponding to the content, and
wherein the content distribution process distributes the content to the electronic device selected for the content in the candidate selection process.
